# NEUE EUROPÄISCHE PATENTSCHRIFT

(11) **EP 1 284 937 B2**
(45) Veröffentlichungstag und Bekanntmachung des Hinweises auf die Entscheidung über den Einspruch: **24.02.2010**
(45) Hinweis auf die Patenterteilung: 16.06.2004
(21) Anmeldenummer: 01943026.3
(22) Anmeldetag: 04.05.2001
(51) Int. Cl.: C03C 3/091, C03C 3/087, C03C 4/00, H01J 61/30, H01K 1/28

(54) **VERWENDUNG VON THERMISCH-HOCH-BELASTBAREN ALUMOERDALKALISILIKATGLÄSERN FÜR LAMPENKOLBEN**
USE OF ALUMINO EARTH-ALKALI SILICATE GLASSES WITH HIGH THERMAL CAPACITY FOR LIGHT BULBS
L'UTILISATION DES VERRES DE SILICATE ALUMINO-ALCALINO-TERREUX POUVANT SUPPORTER DES CHARGES THERMIQUES ELEVEES POUR DES AMPOULES D'ECLAIRAGE

(30) Priorität: 05.05.2000 DE 10022769
(43) Veröffentlichungstag der Anmeldung: 26.02.2003
(73) Patentinhaber: TELUX-Spezialglas GmbH, 02943 Weisswasser (DE)
(72) Erfinder: BERGMANN, Hannelore, 02943 Weisswasser (DE); BERGMANN, Hans-Jürgen, 02943 Weisswasser (DE)
(74) Vertreter: Uhlemann, Henry
(86) Internationale Anmeldenummer: PCT/DE2001/001725
(87) Internationale Veröffentlichungsnummer: WO 2001/085632

(56) Entgegenhaltungen:
- WO-A1-99/14794
- DE-A- 19 851 927
- DE-A1- 2 930 249
- DE-A1- 3 736 887
- DE-A1- 10 006 305
- DE-C- 19 747 354
- DE-C- 19 747 355
- DE-C1- 19 758 481
- DE-C2- 2 650 298
- US-A- 3 496 401
- US-A- 3 531 271
- US-A- 3 978 362
- US-A- 4 605 632
- SPRINGER VERLAG,BERLIN,HEIDELBERG,: 'Glas-Natur,Struktur und Eigenschaften', Bd. 3.AUFLAG, 1988, NEW YORK,LONDON,PARIS,, TOKIO Artikel HORST SCHOLZE, Seiten 136-138- - 160-162
- JOHN T. BROWN,HISASHI KOBAYASHI: 'Is your Glass Full of Water' CERAM.ENG.SCI.PROC. 17 (2) 1996, Seiten 170 - 179

## Beschreibung

Die Erfindung betrifft die Verwendung von Alumoerdalkalisilikatgläser für Molybdän - Glas - Einschmelzungen in Form von Lampenkolben als Außenhülle für Lampen, insbesondere für Lampen mit regenerativem Halogenkreislauf bei Kolbentemperaturen von über 550 °C bis zu 700 °C.

Es ist bekannt, dass die Stabilität des regenerativen Halogenkreislaufes in der Halogenlampe Voraussetzung für die Erreichung der Ziellebensdauer einer Halogenlampe ist. Entscheidend hierfür ist die Erhaltung des Gleichgewichtes Bildung und Zerfall der Wolframhalogenide. Störungen des Halogenkreislaufes können u. a. durch kleinste Mengen Verunreinigungen sowohl im Glas als auch im Wendel- und Drahtdurchführungsmaterial sein. Diese Verunreinigungen können u. a. aufgrund der hohen Lampentemperaturen aber auch der energiereichen Strahlung der Wolframwendel den Halogenkreislauf schwächen, so dass sich metallisches Wolfram auf der Kolbeninnenseite als schwarzer Niederschlag bildet. Damit werden Lampenleistung und Lichtdurchlässigkeit geschwächt. Als gesichert ist bekannt, dass insbesondere Alkaliionen sich derart störend auf den Halogenkreislauf auswirken. Deshalb sind großtechnisch hergestellte Halogenlampengläser praktisch alkalifrei, was neuerdings Alkalioxidgehalte (R₂O) <0,03 Gew.-% bedeutet, insofern keine Stabilisierungsbestandteile deren Wirkung teilweise kompensieren können. Neben den negativ wirkenden Alkaliionen werden auch solchen Bestandteilen wie z. B. H₂, OH⁻, CO und CO₂ aggressive Wirkung, d. h. Störung des Kreislaufprozesses zugeschrieben.

EP 0 913 365 und DE 197 47 354 begrenzen deshalb den Wassergehalt auf < 0,02 Gew.-%, um eine Schwarzfärbung der Lampe zu verhindern.

EP 0 913 366 und DE 197 58 481 begrenzen den Wassergehalt ebenso auf < 0,02 Gew.-%, da dem Wasser bzw. den Wasserstoffionen ebenfalls eine störende Wirkung auf den Halogenkreislaufprozeß zugeschrieben wird.

WO 99/14794 begrenzt den Wassergehalt ebenfalls auf < 0,02 Gew.-%.

US 4,163,171 beinhaltet eine für Halogenlampengläser nichttypische Glaszusammensetzung (SiO₂ bei 50,0, P₂O₅ bei 4,8 und Al₂O₃ bei 19,2 Gew.-%), bei der der CO- und Alkaligehalt praktisch Null und der Wassergehalt auf weniger als 0,03 Gew.-% begrenzt ist Gläser dieses Zusammensetzungstyps sind als Halogenlampengläser praktisch nicht zum Einsatz gekommen.

Zahlreiche Hartgläser, die für Halogenlampen verwendet wurden und werden, wie z. B. die Gläser 180 von GE, 1720, 1724 und 1725 von Corning sowie 8252 und 8253 von Schott haben Wassergehalte unter 0,025 Gew.-%, teilweise unter 0,02 Gew.-%. Diese Gläser liegen im Zusammensetzungsbereich nach Tabelle 1.

**Tabelle 1**

| Oxide | Gew.-% |
|---|---|
| SiO₂ | 56,4 - 63,4 |
| Al₂O₃ | 14,6 - 16,7 |
| B₂O₃ | 0 - 5,0 |
| BaO | 7,5-17,0 |
| CaO | 6,7 - 12,7 |
| MgO | 0-8,2 |
| SrO | 0 - 0,3 |
| ZrO₂ | 0 - 1,1 |
| TiO₂ | 0 - 0,2 |
| Na₂O | 0,02 - 0,05 |
| K₂O | 0,01 - 0,02 |
| Fe₂O₃ | 0,03 - 0,05 |

Typische Zusammensetzungen von Halogenlampengläsem in Patenten liegen in den Bereichen der Tabelle 2.

**Tabelle 2**

| Oxide | Gew.-% |
|---|---|
| SiO₂ | 52 - 71 |
| Al₂O₃ | 13-25 |
| B₂O₃ | 0-6,5 |
| BaO | 0-17 |
| CaO | 3,5 - 21 |
| MgO | 0 - 8,3 |
| SrO | 0 - 10 |
| ZrO₂ | 0 - 5,5 |
| R₂O | 0 -0,08 (1,2) |
| TiO₂ | 0 - 1 |
| Wasser < | 0,025 |

Die Einhaltung der Grenzwerte, insbesondere des niedrigen Wassergehaltes stellt sowohl an die verwendeten Rohstoffe als auch an den Glasschmelzprozeß erhebliche Anforderungen, wie z.B.
- Einsatz getrockneter Rohstoffe und Scherben,
- wasserfreie Rohmaterialien,
- erhöhter technischer und damit finanzieller Aufwand für Anlagentechnik und das Betreiben der Glasschmelzanlagen zur Erzielung von Schmelztemperaturen über 1600 °C bei einem niedrigen Wasserdampfpartialdruck über der Schmelze.

Es besteht gegenwärtig und zukünftig ein erheblicher Bedarf an Gläsern für Halogenlampen.

Die Aufgabe der Erfindung besteht in der Verwendung von Alumoerdalkalisilikatgläser, die ökonomisch vorteilhafter sind, als Halogenlampen.

Erfindungsgemäß wird die Aufgabe durch die Verwendung eines Alumoerdalkalisilikatglases mit den Merkmalen nach Anspruch 1 gelöst. Überraschend und entgegen der gegenwärtigen Auffassung wurde gefunden, dass die erfindungsgemäß verwendeten Alumoerdalkalisilikatgläser mit einem Wassergehalt von 0,025 bis 0,042 Gew.-% die Anforderungen an ein Halogenlampenglas erfüllen und Nachteile aus diesen Verunreinigungen für den Halogenkreislaufprozeß bei Kolbentemperaturen zwischen 550 und 700 °C nicht zeigen. In Gläsern mit einem Wassergehalt von 0,025 bis 0,042 Gew.-% wirkt sich der Wassergehalt nicht als Verunreinigung im Sinne einer Gleichgewichtsstörung zwischen Bildung und Zerfall von Wolfram-Halogeniden aus. Eine Schwarzfärbung der Kolbeninnenoberfläche der Lampe tritt nicht oder nicht stärker auf im Vergleich zu Kolbengläsem mit einem wesentlich geringeren Wassergehalt.

Die Erfindung umfaßt die Verwendung von Alumoerdalkalisilikatgläser unter Anspruch 1, die die für Lampenkolben in Wolfram-Halogenlampen notwendigen Eigenschaften aufweisen, wie
- die Verwendung von Molybdän als Drahtdurchführungsmaterial und die über den thermischen Ausdehnungskoeffizienten zu erreichenden Druckspannungen im Glase,
- die hohe thermische Erweichung des Glases, die die obere Lampentemperatur begrenzt:

| | |
|---|---|
| α _{20-400°C} | 4,4 - 4,8* 10⁻⁶ K⁻¹ |
| Tₛₜᵣ | 665 - 730 °C |
| T_{soft} | 925 - 1020 °C |

Die erfindungsgemäßen Gläser gemäß Anspruch 1 ermöglichen den Einsatz in Halogenlampen im Temperaturbereich des Kolbens zwischen 550 und 700 °C, zeigen die Nachteile aus Verunreinigungen, wie z. B. Wasser, für den Halogenkreislaufim Vergleich zu wasserarmen Gläsern nicht und haben in der Herstellung wirtschaftliche Vorteile gegenüber den bisherigen marktfähigen Gläsern.

Untersuchungen zum Einfluß des Wassergehaltes auf Alumoerdalkalisilikatgläser zeigten überraschend folgende Ergebnisse:
- Senkung der Liquidustemperatur um durchschnittlich 10 bis 15 K im Zusammensetzungsbereich im Vergleich zur Verarbeitungstemperatur im Rohrformgebungsbereich.
- Senkung der Viskositätstemperaturen im Viskositätsbereich 10^{13,0} bis 10^{14,5} um durchschnittlich 6 bis 14 K bei Beibehaltung der Viskositätstemperaturen im Verarbeitungsbereich.
- Verbesserung des Einschmelzverhaltens der Gläser in der Flamme beim Ein- und Verschmelzen.

Aus diesen Ergebnissen lassen sich nicht unbedeutende wirtschaftliche Vorteile für die großtechnische Herstellung von Halogenlampengläsem ableiten. Das sind
- Einsatz energieeffizienter Schmelzverfahren für die Glasschmelze von Halogenlampengläsem, wie z. B. "oxy-fuel-melter" mit erheblicher produktspezifischer Energieeinsparung,
- Energieeinsparung durch Absenkung der Schmelztemperaturen für die Glasschmelze bei gleichzeitiger Minderung des Verschleißes an feuerfestem Material der Glasschmelzanlagen,
- Ausbeuteerhöhung bei der Glasrohrfertigung durch völlige Vermeidung der Kristallisation der Gläser während der Rohrformgebung infolge Senkung der Liquidustemperatur gegenüber der Verarbeitungstemperatur,
- Einsatz wasserhaltiger Glasrohrstoffe,
- Erhöhung der Verarbeitungsgeschwindigkeiten bei der Lampenherstellung infolge "steilerem" Temperatur-Viskositäts-Verlaufes des Glases.

### Anhand folgender Ausführungsbeispiele wird die Erfindung näher erläutert:

Um eine unmittelbare Anwendung zu gewährleisten, wurden Beispielgläser in einer Glasschmelzwanne mit 3,5 t Inhalt geschmolzen und nachfolgend Rohr gezogen.
Die Glasschmelzwanne war mit einer kombinierten Gas-Sauerstoff- bzw. Gas-Luft-Beheizung ausgerüstet, so dass sowohl eine Gas-Sauerstoff- oder Gas-Luft-Beheizung als auch Kombinationsvarianten in der Beheizung möglich waren. Damit war es möglich, den Wassergehalt des Glases über den Partialdruck der Ofenatmosphäre zu variieren und einzustellen.

Als Rohstoffe wurden Quarzmehl, Aluminiumoxid, Tonerdehydrat, Borsäure, Calcium-, Barium,- und Strontiumcarbonat, Magnesiumoxid, Zirkonsilikat, Titanoxid, Zinkoxid und Ceroxid verwendet. Die Rohstoffe waren alkaliarm und hatten technische Reinheit. Wasserhaltige Rohstoffe, wie z. B. Aluminiumhydroxid wurden eingeführt, um den Wassergehalt der Gläser zusätzlich zu steuern. Rohstoffe und Scherben kamen getrocknet bzw. feucht zum Einsatz.

Die Glasschmelzwanne verfügt zusätzlich über Hilfsvorrichtungen, um Wasserdampf direkt in die Glasschmelze einzublasen; eine weitere Möglichkeit, den Wassergehalt des Glases zu verändern.
Damit war es möglich
- die Glaszusammensetzung,
- den Wassergehalt und
- die Schmelzbedingungen wie z. B. Schmelztemperaturen und Schmelzzeit im Rahmen der Aufgabenstellung der Erfindung zu variieren.

Die Gläser wurden bei Temperaturen zwischen 1600 und 1660 °C geschmolzen, geläutert und homogenisiert. Die hieraus hergestellten Rohre waren glasfehlerfrei und entsprachen den Abmessungen zur Lampenherstellung. Aus den Rohren wurden Halogenlampen hergestellt und dem Brenndauertest unterzogen. Das Elektrodenmaterial wurde grundsätzlich ausgeglüht, um dessen Einfluß auf den Halogenkreislaufprozeß zu eliminieren.

Glaszusammensetzungen und wichtige Glaseigenschaften der geschmolzenen Beispielgläser (A) wurden mit bekannten wasserarmen Gläsern (V) verglichen. Die Vergleichswerte sind in Tabelle 3 aufgeführt.

**Tabelle 3**

| Glaszusammensetzung und Eigenschaften der Ausführungs- und Vergleichsbeispiele A bzw. V | | | | | | | | | | | |
|---|---|---|---|---|---|---|---|---|---|---|---|
| | | | | | | | | | | | |
| Oxide | Gew.-% | A1 | V1 | A2 | V2 | A3 | V3 | A4 | V4 | A5 | V5 |
| SiO₂ | | 59,4 | 59,4 | 55,5 | 55,5 | 60,8 | 60,8 | 60,4 | 60,4 | 61,9 | 61,9 |
| Al₂O₃ | | 16,0 | 16,0 | 17,6 | 17,6 | 16,2 | 16,2 | 16,4 | 16,4 | 14,2 | 14,2 |
| B₂O₃ | | 1,7 | 1,7 | 4,0 | 4,0 | 0,5 | 0,5 | 1,9 | 1,9 | | |
| BaO | | 11,1 | 11,1 | 8,7 | 8,7 | 8,2 | 8,2 | 6,9 | 6,9 | 16,6 | 16,6 |
| CaO | | 9,5 | 9,5 | 7,8 | 7,8 | 12,5 | 12,5 | 11,3 | 11,3 | 6,7 | 6,7 |
| MgO | | 1,0 | 1,0 | 5,5 | 5,5 | | | 1,0 | 1,0 | | |
| SrO | | | | 0,3 | 0,3 | | | 1,2 | 1,2 | 0,2 | 0,2 |
| ZrO₂ | | 1,0 | 1,0 | 0,2 | 0,2 | 1,5 | 1,5 | 0,2 | 0,2 | | |
| TiO₂ | | 0,2 | 0,2 | 0,1 | 0,1 | | | 0,3 | 0,3 | 0,2 | 0,2 |
| ZnO | | | | 0,2 | 0,2 | | | 0,3 | 0,3 | | |
| CeO₂ | | | | | | 0,2 | 0,2 | | | 0,1 | 0,1 |
| R₂O | | 0,026 | 0,026 | 0,028 | 0,028 | 0,028 | 0,028 | 0,026 | 0,026 | 0,029 | 0,029 |
| Wasser | | 0,039 | 0,021 | 0,041 | 0,021 | 0,040 | 0,020 | 0,033 | 0,018 | 0,039 | 0,019 |
| | | | | | | | | | | | |
| ^{α}20-400 | 10⁻⁶K⁻ 1 | 4,50 | 4,51 | 4,44 | 4,45 | 4,55 | 4,55 | 4,43 | 4,45 | 4,61 | 4,60 |
| Tₛₜᵣ | °C | 700 | 710 | 675 | 683 | 715 | 725 | 707 | 712 | 723 | 735 |
| Tₐₙₙ | °C | 760 | 770 | 723 | 730 | 766 | 780 | 759 | 765 | 775 | 786 |
| T_{soft} | °C | 987 | 990 | 929 | 930 | 996 | 998 | 982 | 984 | 1017 | 1018 |
| T_{work} | °C | 1294 | 1295 | 1198 | 1197 | 1309 | 1310 | 1291 | 1290 | 1366 | 1367 |
| T_{liqu.} | °C | 1181 | 1195 | 1138 | 1150 | 1225 | 1240 | 1215 | 1230 | 1190 | 1200 |
| KWG ₘₐₓ | µm/min | 8 | 12 | 18 | 25 | 14 | 16 | 12 | 13 | 5 | 8 |

Wie aus Tabelle 3 zu sehen ist, haben die unterschiedlich zusammengesetzten Gläser verschiedenes Einweichungsverhalten in Bezug auf die maximal zulässige Kolbentemperatur in der Lampe. Deshalb wurden hochbelastete Lampen aus den hocherweichenden Gläsern und normal belastete Lampen aus Gläsern mit niederer Erweichungstemperatur hergestellt. Im Ergebnis des Brenndauertests der Halogenlampen wurden Schwärzung (Fleckenbildung an der Kolbeninnenoberfläche) und Lichtstromverlust beurteilt. Die Brenndauer betrug jeweils zwischen 135 und 720 Stunden je nach Lampentyp. Die Ergebnisse sind in Tabelle 4 dargestellt.

**Tabelle 4**

| Ergebnisse der Brenndauertests an Halogenlampen Lichtstromabfall / Durchschnitt von jeweils 20 Lampen in % | | | | | | | | | | |
|---|---|---|---|---|---|---|---|---|---|---|
| | A1 | V1 | A2 | V2 | A3 | V3 | A4 | V4 | A5 | V5 |
| | 2,4 | 1,9 | 4,7 | 4,5 | 2,0 | 2,1 | 3,7 | 4,1 | 6,4 | 5,9 |

| Schwärzung / Anzahl von je 20 Lampen | | | | | | | | | | |
|---|---|---|---|---|---|---|---|---|---|---|
| Mit Schwärzung | 0 | 0 | 3 leichte | 2 leichte | 0 | 0 | 1 leichte | 2 leichte | mittlere 2 leichte | mittlere 3 leichte 1 |
| ohne Schwärzung | 20 | 20 | 17 | 18 | 20 | 20 | 19 | 18 | 15 | 16 |

Um die Ergebnisse der Halogenlampentests abzusichern, wurden weitergehende Tests durchgeführt:
- Hochvakuumentgasungstest im Temperaturbereich von 900 ... 1600 °C zur Bestimmung des Glasgehaltes der Gläser und
- Bestimmung der Wasserabgabe des Glases bei der unteren Entspannungstemperatur Tₛₜᵣ unter Vakuum im Vergleich zum Gesamtwassergehalt prozentual (IR - Spektroskopie).

Die Ergebnisse sind in Tabelle 5 dargestellt.

**Tabelle 5**

| Gasabgabe der Gläser unter Hochvakuum im Temperaturbereich 900...1600 °C / 10⁻⁴ Pa Vᵢ - Gläser = 1 im Vergleich zu Aᵢ | | | | | | | | | | |
|---|---|---|---|---|---|---|---|---|---|---|
| | A1 | V1 | A2 | V2 | A3 | V3 | A4 | V4 | A5 | V5 |
| Gesamt- Gasabgabe % | 0,969 | 1 | 1,043 | 1 | 1,007 | 1 | 0,932 | 1 | 0,992 | 1 |
| | | | | | | | | | | |

| Wasserabgabe der Gläser bei jeweils T ₛₜᵣ ( 120 Stunden, 1, 10⁻¹ mbar ) | | | | | | | | | | |
|---|---|---|---|---|---|---|---|---|---|---|
| | A1 | V1 | A2 | V2 | A3 | V3 | A4 | V4 | A5 | V5 |
| Gesamtgehalt ppm | 392 | 211 | 410 | 208 | 401 | 203 | 332 | 180 | 394 | 193 |
| **Abgabe:** ppm | 3 | 3 | 5 | 4 | 7 | 5 | 3 | 4 | 7 | 5 |
| % | 0,9 | 1,4 | 1,3 | 1,9 | 1,9 | 2,5 | 1,0 | 2,2 | 1,8 | 2,6 |

Die Ergebnisse zeigen, dass sowohl bei der Gasabgabe absolut unter Hochvakuum als auch bei der Wasserabgabe bei Tₛₜᵣ keine signifikanten Unterschiede bei Gläsern mit niederem und höherem Wassergehalt vorhanden sind. Die Ergebnisse stimmen tendenziell mit denen der Lebensdauerergebnisse der Halogenlampen überein. Die Wasserabgabe von höher wasserhaltigen Gläsern (0,025...0,042 Gew.-%) ist nicht größer als bei Gläsern mit wesentlich niederen Wassergehalten. Gleiches gilt für die Gesamtgasabgabe der Gläser. Die Ergebnisse der Brenndauertests der Halogenlampen zeigen, dass kein signifikanter Unterschied zwischen der Verwendung von Gläsern mit hohem und weniger hohem Wassergehalt hinsichtlich der Lebensdauer (Ausfall, Lichtstromabfall, Schwärzung) besteht. Mit dem Einsatz von Gläsern mit höherem Wassergehalt und deren nachgewiesener Eignung in der Verwendung von Halogenlampen lassen sich die o. g. wirtschaftlichen Vorteile in der Herstellung des Glases, der Glasrohre und der Halogenlampen voll nutzen. Dies bezieht sich auf Gläser im breiten geschützten Zusammensetzungsbereich gemäß Anspruch 1..

## Patentansprüche

1. Verwendung eines Alumoerdalkalisilikatglases für Lampenkolben für Wolfram Halogenglühlampen mit Temperatur von über 550°C bis zu 700°C, mit folgender Glaszusammensetzung (Gew.-):
| | |
|---|---|
| SiO₂ | 55;0 - 62,5 |
| Al₂O₃ | 14,5 - 18,5 |
| B₂O₃ | 0 - 4,0 |
| BaO | 7,5 - 17,0 |
| CaO | 6,5 - 13,5 |
| MgO | 0 - 5,5 |
| SrO | 0 - 2,0 |
| ZrO₂ | 0 - 1,5 |
| TiO₂ | 0 - 1,0 |
| ZnO | 0 - 0,5 |
| CeO₂ | 0 - 0,3 |
| R₂O | < 0,03 |
| H₂O | 0,025 - 0,042 |

## Claims

1. Use of an alumino earth-alkali silicate glass for light bulbs for tungsten-halogen incandescent lamps with temperatures of higher than 550 °C to 700 °C with the following glass composition (wt.-%):
| | |
|---|---|
| SiO₂ | 55.0 - 62.5 |
| Al₂O₃ | 14.5 - 18.5 |
| B₂O₃ | 0 - 4.0 |
| BaO | 7.5 - 17.0 |
| CaO | 6.5 - 13.5 |
| MgO | 0 - 5.5 |
| SrO | 0 - 2.0 |
| ZrO₂ | 0 - 1.5 |
| TiO₂ | 0 - 1.0 |
| ZnO | 0 - 0.5 |
| CeO₂ | 0 - 0.3 |
| R₂O | < 0.03 |
| H₂O | 0.025 - 0.042 |

## Revendications

1. Utilisation d'un verre de silicate alumino-alcalino-terreux pour des ampoules d'éclairage pour des ampoules à halogène au tungstène avec des températures de plus de 550 °C jusqu'à 700 °C avec la composition (massique) suivante du verre:
| | |
|---|---|
| SiO₂ | 55,0 - 62,5 |
| Al₂O₃ | 14,5 - 18,5 |
| B₂O₃ | 0 - 4,0 |
| BaO | 7,5 - 17,0 |
| CaO | 6,5 - 13,5 |
| MgO | 0 - 5,5 |
| SrO | 0 - 2,0 |
| ZrO₂ | 0 - 1,5 |
| TiO₂ | 0 - 1,0 |
| ZnO | 0 - 0,5 |
| CeO₂ | 0 - 0,3 |
| R₂O | < 0,03 |
| H₂O | 0,025 - 0,042 |
